**Europäisches Patentamt**

**European Patent Office**

**Office européen des brevets**

(19)

(11) Veröffentlichungsnummer: **0 352 785**

**A1**

(12) # EUROPÄISCHE PATENTANMELDUNG

(21) Anmeldenummer: **89113857.0**

(22) Anmeldetag: **27.07.89**

(51) Int. Cl.⁴: **B65G 1/06 , B66F 9/07**

(30) Priorität: **27.07.88 DE 3825451**

(43) Veröffentlichungstag der Anmeldung:
**31.01.90 Patentblatt 90/05**

(84) Benannte Vertragsstaaten:
**AT BE CH DE ES FR GB GR IT LI LU NL SE**

(71) Anmelder: **PROLINE Innovation zur Fabrikautomation GmbH & Co. Kommanditgesellschaft Emil-Figge-Strasse 76 D-4600 Dortmund 50(DE)**

(72) Erfinder: **Gandt, Burkhardt, Dipl.-Ing. Unterer Ahlenbergweg 19 D-5804 Herdecke-Ahlenberg(DE)**
Erfinder: **George, Horst, Dipl.-Ing. Gotthelfstr. 101 D-4600 Dortmund 50(DE)**
Erfinder: **Nolte, Friedhelm, Dipl.-Ing. Oberstr. 183A D-4630 Bochum 7(DE)**
Erfinder: **Seltenheim, Volker, Dr.-Ing. Aplerbecker Str. 489 D-4600 Dortmund 41(DE)**

(74) Vertreter: **Beckensträter, Friedrich Wihelm, Dr. Faikensteiner Strasse 23 D-6000 Frankfurt am Main 1(DE)**

(54) **Vorrichtung und System zur Handhabung und Speicherung von Paletten und palettenähnlichen oder auch anderen Gegenständen.**

(57) Modular aufgebaute Vorrichtung zur Handhabung und Speicherung von Paletten bzw. palettenähnlicher oder anderer Gegenstände, auf denen Werkstücke, Werkzeuge oder Vorrichtungen abgelegt sind bzw. die selbst direkt gehandhabt und im Magazin gespeichert werden. Vorzugsweise um eine rotierende Achse werden Gegenstände in unterschiedlichen Höhen und unterschiedlichen Winkeln auf peripheren Einrichtungen abgelegt bzw. von diesen aufgenommen. Als Bestandteil einer flexiblen Fertigungs- oder Montagezelle stellt sie eine produktunabhängige Lösung für die Zu- und Abführung sowie die Zwischenspeicherung der zuvor beschriebenen Gegenstände dar und unterstützt die Produktumstellung ohne Personaleinsatz während der Produktion. Die Gestaltung der Module für die Handhabung und die peripheren Einrichtungen des Systems erlauben eine Vielzahl von Modulkombinationen und Einsatzmöglichkeiten sowie durch die hohe Eigenflexibilität eine gute Integrationsfähigkeit in bestehende Fertigungs- und Montagezellen oder -straßen.

FIG. 1

## Vorrichtung und System zur Handhabung und Speicherung von Paletten und palettenähnlichen oder auch anderen Gegenständen

Die Erfindung bezieht sich auf eine Vorrichtung und ein System zur Handhabung, Bereitstellung, Zwischenspeicherung und/oder Magazinierung von Paletten, palettenähnlichen oder anderen Gegenständen wie Werkzeugen, Werkstücken, Baugruppen und/oder Vorrichtungen, die vorzugsweise palettiert sind, mit einer um eine vertikale Achse verdrehbaren und/oder linear verschiebbaren Greifeinrichtung.

Es sind bereits verschiedene Arten von Vorrichtungen zur Handhabung von Paletten, hauptsächlich Euro-Paletten und palettenähnlichen Gegenständen oder Behältern bekannt.

So sind z.B. in der DE-AS 22 41 213, der DE-AS 22 42 475 und den PCT-Veröffentlichungen WO 85/01493, WO 85/03495, WO 86/03178 und WO 86/07579 sowie in der DE-OS 25 23 896 und der DE-OS 32 03 754 jeweils Vorrichtungen beschrieben, die unter den Oberbegriff Regalförderzeuge fallen. In einem Gang zwischen in zwei Reihen angeordneten Regalen oder Lagerstellen oder auch entlang einer einzelnen Regal- oder Gestellreihe ist ein Förderzeug z.B. auf Schienen verfahrbar, das eine Greifeinrichtung trägt, die dem Regal oder Lagergestell darin abgestellte Paletten oder andere vorzugsweise flache Gegenstände entnehmen und z.B. auf einer Fördereinrichtung ablegen kann oder umgekehrt. Dazu ist die Greifeinrichtung ihrerseits an dem Förderzeug vertikal und horizontal verschiebbar oder auch um eine vertikale Achse in horizontaler Ebene verschwenkbar. Auch Türme von ineinander gestapelten Behältern lassen sich mit einer derartigen Vorrichtung auf- bzw. abbauen oder umstapeln, wobei immer eine bestimmte Anzahl von Behältern in einer bestimmten Reihenfolge ab- bzw. aufgestapelt wird (WO 85/03495). Diese Vorrichtungen haben die Aufgabe, Paletten und darauf abgelegte Gegenstände vor, während oder nach einer Bearbeitung oder Montage für einen längeren Zeitraum zu speichern und z.B. für eine Weiterverarbeitung oder für den Versand bereitzuhalten. Deshalb steht bei diesen Vorrichtungen meist die Anzahl der Palettenlagerplätze und weniger die Zugriffszeit im Vordergrund. Die Palettenlagerplätze bzw. die Aufnahme- oder Ablageplätze sind stationär und werden von der Vorrichtung meist schienengebunden angefahren. Die Vorrichtungen bestehen meist ausschließlich aus Lineareinheiten, die für große Gewichte ausgelegt sind.

Durch die DE-OS 36 16 889, die DE-OS 33 36 109 und die DE-PS 33 45 920 sind Vorrichtungen bekannt, durch die einem ersten Stapel von Paletten mit darin vorzugsweise in bestimmter Ordnung abgelegten Werkstücken oder Behältern die oder der jeweils unterste entnommen, einer Bearbeitungsstätte oder auch einer Füllvorrichtung zugeführt und nach beendeter Bearbeitung oder Füllung einem zweiten Stapel zuunterst eingeschoben wird. Dazu wird am ersten Stapel der zweitunterste Behälter mit einer Greifvorrichtung ergriffen und durch eine Hubvorrichtung mit samt dem darüber liegenden Stapel angehoben, danach wird über eine Fördervorrichtung, auf der der unterste Behälter bereits steht, dieser der Bearbeitungsstätte oder Füllvorrichtung zugeführt und nach beendeter Bearbeitung oder Füllung zu dem zweiten Stapel transportiert, welcher durch eine Greif- und Hubvorrichtung als ganzes, d.h. den untersten Behälter oder die unterste Palette ergreifend, um das nötige Maß angehoben wird, damit die abgearbeitete Palette oder der gefüllte Behälter unter den Stapel befördert und letzterer auf die neue unterste Palette bzw. untersten Behälter aufgesetzt werden kann.

Auch bei diesen Vorrichtungen steht weniger die Zugriffszeit im Vordergrund als die Stapelkapazität; auch sie weisen fast ausschließlich lineare Bewegungseinheiten auf. Der Bearbeitungsstätte können die Paletten mit den darin geordnet abgelegten Werkstücken nur in einer bestimmten Reihenfolge zugeführt werden, wobei immer die jeweils unterste Palette dem ersten Stapel entnommen wird. Eine solche Vorrichtung eignet sich also nur für die Bearbeitung oder Weiterbehandlung von über längere Zeit gleichen Werkstücken oder Werkstückgruppen.

Die DE-OS 29 40 051 beschreibt eine Vorrichtung mit der sich profiliert ausgebildete plattenförmige Gegenstände, z.B. Paletten, ineinander verschachtelt und damit besonders platzsparend bis zur Verwendung stapeln und bevorraten lassen. Dazu ist eine vertikal verschiebbare Greifeinrichtung zusätzlich um eine eigene Aschse um 180° drehbar, so daß immer von zwei Paletten eine mit ihrer Unterseite in die Oberseite der anderen, also mit den Profilen ineinandergreifend abgelegt werden kann.

In der PCT-Veröffentlichung WO 86/06050 ist ein Handhabungssystem beschrieben, mit dem computergesteuert flache Gegenstände einem Magazin, im beschriebenen Fall Videocassetten einer sogenannten Videothek, entnommen und einer Weiterbehandlungsstätte, im konkreten Fall einer Abspielvorrichtung zugeführt werden können. Dazu sind die Cassetten in einem achteckigen Turm in an sieben Seiten des Achtecks liegenden Säulen abgelegt; eine Greifeinrichtung mit vorzugsweise mehreren, z.B. vier, einzelnen Greifern ist entlang einer in der Mitte des Turms verlaufenden Achse vertikal verschiebbar und um sie drehbar. Durch Eingabe am Computer können bestimmte Cassetten dem Magazinturm entnommen und an dessen achter Seite über mehrere Vorrichtungen sozusagen in Bereitschaft gehalten und dem Abspielgerät in bestimmter Reihenfolge zugeführt werden. Auch die Beschickung des Magazins, die Ablage und die Entnahme von Cassetten wird durch Lesen des sogenannten Strichcodes im Computer gespeichert.

In diesem Fall ist zwar die Zugriffszeit gegenüber anderen bekannten Vorrichtungen wesentlich verkürzt; dem dient vor allem die Ausführung der Greifeinrichtung mit mehreren Einzelgreifern, so daß sich deren Wege im Achteck verkürzen, und die Möglichkeit der mehrfachen Ausgabe am Magazin durch parallel arbeitende Vorrichtungen an der achten Seite des Magazinturms. Auch ist der gezielte Zugriff auf bestimmte Cassetten durch die Computersteuerung möglich. Allerdings ist die Vorrichtung äußerst zweckgebunden und z.B. auf die Achteckform des Magazinturms angewiesen und stationär mit der Abspielanlage verbunden.

Es ist überhaupt ein Merkmal all der bekannten Anlagen und Vorrichtungen,daß ihr Anwendungsbereich äußerst beschränkt ist und sie eigentlich immer nur dem einen Zweck dienen können, für den sie als Ganzes ausgelegt wurden, etwa das Aufbauen und Auflösen von Behälter- oder Palettenstapeln, das Umstapeln von einem Transportband auf ein zweites, das Entnehmen von Gegenständen aus einem Magazin und deren Ab legen auf ein Transportmittel oder umgekehrt. Sie können dafür meist nur ein oder zwei Bewegungsarten ausführen, etwa eine Linearbewegung in horizontaler Richtung oder jeweils eine Linearbewegung in vertikaler und horizontaler Richtung oder eine Linearbewegung in vertikaler Richtung und eine Drehbewegung um eine vertikale Achse, wobei diese häufig auf einen ganz bestimmten Winkel, etwa 90°, beim Umstapeln an im rechten Winkel zueinander verlaufenden Transportbändern beschränkt ist. Wegen ihrer Zweckgebundenheit sind die Vorrichtungen auch meist stationär an ihrem Einsatzort eingerichtet.

Die bekannten Vorrichtungen sind somit hinsichtlich ihres Anwendungsbereichs und ihres Einsatzortes äußerst unflexibel und lassen sich kaum an neue oder verschiedene Erfordernisse anpassen bzw. zu diesem Zweck umrüsten.

So sind im Montagebereich keine Vorrichtungen bekannt, die Paletten mit den darin abgelegten Teilen, Werkzeugen und Vorrichtungen für die Weiterverarbeitung in einer für einen modernen, flexiblen Produktionsablauf, insbesondere in flexiblen Fertigungs- und Montagezellen, geeigneten Art und Weise bereitstellen bzw. in dafür bereitgestellten Magazinen ablegen oder zwischenspeichern.

Es sind lediglich Handhabungsvorrichtungen für Paletten bekannt, meist mittels Aluminiumprofilen aufgebaut, die aber die Paletten direkt aufeinanderstapeln, so daß sie, wie oben bereits beschrieben, der Bearbeitungsstätte nur in einer bestimmten, vorgegebenen Reihenfolge zugeführt werden können, z.B. immer die unterste Palette eines Stapels. Diese Vorrichtungen erlauben also keinen gezielten Zugriff auf gespeicherte Gegenstände und sind daher für die Speicherung von z.B. Vorrichtungen oder Werkzeugen in einem flexiblen Arbeitsbereich nicht geeignet. Außerdem sind sie ebenfalls nur aus Lineareinheiten aufgebaut und auf spezielle, an die Vorrichtung angepaßte Paletten angewiesen.

Den sogenannten Regalförderzeugen, wie den in der Montage derzeit bereits eingesetzten Palettenspeicher-Einrichtungen, ist gemeinsam, daß sie durch die nahezu ausschließliche Verwendung von Lineareinrichtungen und die meist gleisgebundene Bauweise an eine starre Ausrichtung eigener und auch peripherer Baugruppen gebunden sind.

Aufgabe der Erfindung ist es, eine Vorrichtung und ein System zur Handhabung von Paletten bzw. palettenähnlichen oder anderen Gegenständen zu schaffen, mit der bzw. dem manuellen, halb- oder vollautomatisierten Arbeitsplätzen in Fertigung und Montage Paletten und Teile wie Werkzeuge und Vorrichtungen für die Weiterverarbeitung bereitgestellt werden können, die Entsorgung erleichtert und die Zwischenspeicherung ermöglicht wird. Vorrichtung und System sollen so anpassungsfähig sein, daß sie auch in bestehende Fertigungs-und Montageanlagen integriert werden können, bei denen dieses Problem meist unzulänglich gelöst ist. Insbesondere ist an die Anwendung in bereits bestehenden oder noch zu konzipierendenm flexiblen Fertigungs- und Montagezellen gedacht, denen aus verfahrbaren Speichern heraus Werkstücke, Baugruppen, Werkzeuge oder Vorrichtungen durch gezielten Zugriff positioniert zugeführt werden sollen. Vorrichtung und System sollen für einen breiten Anwendungsbereich geeignet sein und an neue Verwendungszwecke leicht anpaßbar bzw. dafür um- oder aufrüstbar sein. Minimaler Platzbedarf und die Möglichkeit der flexiblen Anordnung peripherer Baugruppen sind dabei wesentliche Anforderungen.

Dies wird erfindungsgemäß erreicht durch eine modulare Bauweise der Handhabungsvorrichtung dergestalt, daß die Handhabungsvorrichtung aus einer an den Ansendungszweck angepaßten Kombination verschiedener Bewegungsmodule besteht, durch welche die ebenfalls in Modulbauweise ausgeführte Greifeinrichtung um eine vertikale Achse um einen beliebigen Winkel verdrehbar und/oder in unterschiedlicher Höhe verfahrbar und in Relation zu verschiedenen peripheren Baugruppen, wie Magazinen, Transfersystemen oder Bearbeitungsstätten positionierbar ist.

Durch den modularen Aufbau der Handhabungsvorrichtung, d.h. die Verwendung von Baueinheiten (Bewegungsmodulen), die jeweils eine abgeschlossene Funktion umfassen und einfach zu lösende Schnittstellen zur übrigen Vorrichtung haben, und durch die unterschiedliche Kombierbarkeit der verschiedenen Module läßt sich die Vorrichtung samt dem System, dem sie angehört, in hervorragender Weise an die unterschiedlichsten Anwendungszwecke und Erfordernisse anpassen. Es wird eine hohe Flexibilität erreicht, so daß sich Vorrichtung und System besonders für den Einsatz in flexiblen Fertigungs- und Montageprozessen eignen. Gegenstände können gezielt aus einem Magazin gegriffen, einer Bearbeitungsstätte direkt zugeführt und anschließend erneut (zwischen-) gespeichert oder entsorgt werden. Bestehende Fertigungs- oder Montageanlagen, bei denen dieses Problem noch unzureichend gelöst ist, können ohne zusätzliche konstruktive Änderung aufgerüstet und damit in ihrer Flexibilität verbessert werden. Neue Anlagen können von vornherein hoch flexibel konzipiert werden.

Eine bevorzugte Kombinationsform der Handhabungsvorrichtung besteht aus einem zwischen zwei Rotationsmodulen gehaltenen vertikalen Bewegungsmodul, einem an diesem vertikal geführten, ersten horizontalen Bewegungsmodul, einem an diesem horizontal geführten, zweiten horizontalen Bewegungsmodul und einer an diesem horizontal geführten Greifeinrichtung ebenfalls in Modulbauweise.

Durch Verdrehen mittels der Rotationsmodule und Verschieben an den horizontalen und vertikalen Bewegungsmodulen, kann die Greifeinrichtung um eine vertikale Achse in unterschiedlichen, kontinuierlich anfahrbaren Höhen und unter einem beliebigen Winkel verfahren und positioniert werden. Es ist damit jeder Punkt des von der Handhabungsvorrichtung bestreichbaren Raumes erreichbar.

Die Handhabungsvorrichtung ist vorzugsweise über die Rotationsmulde zwischen von einem Grundgestell abragenden Konsolen drehbar gehalten.

In einer anderen, einfacheren Kombinationsform besteht die Handhabungsvorrichtung aus einem vertikalen Bewegungsmodul und einem an diesem vertikal geführten, horizontalen Bewegungsmodul und einer an diesem horizontal geführten Greifeinrichtung in Modulbauweise. In diesem Fall kann das vertikale Bewegungsmodul zwischen den von einem Grundgestell abragenden Konsolen direkt gehalten sein.

Insbesondere bei dieser einfacheren Kombinationsform ist die Greifeinrichtung auf dem horizontalen Bewegungsmodul vorzugsweise beidseitig der Vorrichtung und durchgehend ausfahrbar. Eine solche Ausführungsform der Greifeinrichtung erlaubt das Durchfahren der Gegenstände durch die Vorrichtung, d.h. die Gegenstände werden von vorn aufgenommen und nach hinten abgelegt, so daß in bestimmten Anwendungsfällen auf die Rotationsmodule verzichtet werden kann. Die Vorrichtung benötigt dann sehr wenig Platz.

Das Grundgestell hat vorzugsweise Rahmenform und ist radial ausgerichtet. Dadurch sind bei der Verwendung der Rotationsmodule keine konstruktiven Restriktionen zu berücksichtigen.

Das Grundgestell kann in vorteilhafter und Platz sparender Weise durch Halte- und Klemmvorrichtungen zu einer Koppelstation aufgerüstet werden, mittels der die Handhabungsvorrichtung an periphere Baugruppen wie Magazine angekoppelt werden kann. Die Handhabungsvorrichtung kann so sicher zu den peripheren Baugruppen positioniert werden, ohne daß besondere Koppelvorrichtungen nötig sind.

Zweckmäßigerweise kann an einer Koppelstation eine Magazinschleuse befestigt werden.

Vorteilhafterweise sind die Rotationsmulde und/oder vertikalen und horizontalen Bewegungsmodule sowie die Greifeinrichtung in unterschiedlichen, leicht austauschbaren Ausführungen mit unterschiedlichen Radien und/oder Längen und für unterschiedliche Gewichtsbereiche ausgelegt vorhanden, die dem Verwendungszweck angepaßt kombinierbar ist.

Auf diese Weise läßt sich der Anwendungsbereich der Erfindung praktisch unbegrenzt erweitern. Eine bestehende Modulkombination läßt sich schnell für einen neuen Verwendungszweck umrüsten bzw. durch Aufrüsten in ihrer Funktionsfähigkeit erweitern. Indem Rotationsmodule mit verschiedenen Radien verfügbar sind, wird die Anzahl der peripheren Einrichtungen nicht begrenzt.

Die Rotationsmodule und/oder vertikalen und horizontalen Bewegungsmodule und die Greifeinrichtung können mit beliebigen Antriebsvorrichtungen ausgerüstet werden, was ebenfalls der Erweiterung des Anwendungsbereichs dient.

Die Rotationsmodule und/oder vertikalen und horizontalen Bewegungsmodule und die Greifeinrichtung können zur Positionierung in ihrer einfachsten Ausführungsform mit Anschlägen, sensorgesteuert oder aber in einer bevorzugten, fortentwickelten Version mit einer freiprogrammierbaren Positioniersteuerung ausgestattet sein, in welch letzterem Fall die Positionierung individueller gemacht werden kann.

Die erfindungsgemäße Handhabungsvorrichtung kann vorzugsweise über eine Koppelstation (z.B. das durch eine Halterungs- und Klemmvorrichtung aufgerüstete Grundgestell) an Magazine von deren Zugriffsseite her an einer die gesamte Zugriffsfläche eines Magazin frei gebenden Stelle angekoppelt werden.

Eine Koppelstation kann mittels einer Magazinschleuse derart ausgebaut werden, daß einzelne oder untereinander verbundene Magazine automatisch der Koppelstation zugeführt werden und bei Erreichen der Koppelstation automatisch an gekoppelt werden. Damit können die Magazine einzeln oder im Verbund von Hand oder maschinell verfahrbar und in Bezug auf die Koppelstation positionierbar sein.

Vorzugsweise sind die Magazine in der Magazinschleuse automatisch in Bezug auf die Koppelstation positionierbar.

Vorteilhaft ist es auch, wenn der Querschnitt der Magazinschleuse dem Profil der Magazine angepaßt und für letztere eine seitliche Führung vorgesehen ist.

Nach der Erfindung können in Bezug auf eine mit Rotationsmodule ausgestattete Handhabungsvorrichtung mehrere Koppelstationen im Winkel angeordnet sein und periphere Baugruppen wie Magazine, Transfereinrichtungen oder sonstige in radialer Anordnung vorgesehen ist.

Das gesamte System kann somit sehr raumsparend und dem Verwendungszweck optimal angepaßt angeordnet werden. Die Anordnung peripherer Einrichtungen ist beliebig und nicht an starre Höhen oder Winkel gebunden.

Vorteilhaft ist die Handhabungsvorrichtung samt Koppelstation insgesamt verfahrbar. So kann sie je nach Bedarf, z.B. bei Produktionsstörungen bestehender Produktionsanlagen, an beliebiger Stelle in den Materialfluß als Puffer eingesetzt werden.

Nach der Erfindung besteht auch die Möglichkeit der Integration eines weiteren oder mehrerer Indentsysteme. Dadurch können unterschiedliche, ungeordnet gespeicherte Produkte dem Produktionsprozeß gezielt zu- bzw. von ihm abgeführt werden oder Werkstücke, Baugruppen, Werkzeuge und Vorrichtungen in fahrbaren oder stationären Magazinen an beliebiger Stelle gleichzeitig angeboten werden.

In vorteilhafter Weise können durch die erfindungsgemäße Handhabungsvorrichtung einem Roboter, einer anderen Handhabungsvorrichtung, einer Fertigungs- oder Montageeinrichtung und/oder einem Transfersystem gezielt Gegenstände aus einem Magazin zugeführt bzw. erneut in einem Magazin abgelegt werden.

Vorrichtung und System sind nach der Erfindung hinsichtlich der Funktion und der Steuerung vorzugsweise autark konzipiert; sie sind damit ohne Datenleitungen oder Verknüpfung zu anderen Steuerungen funktionsfähig.

Die Vorteile, die mit Hilfe der Erfindung zu erzielen sind, bestehen insbesondere darin, daß integriert in den Materialfluß eines Unternehmens Fertigungs- und Montagezellen oder -straßen mit Gegenständen automatisch beschickt werden können. Dabei erlaubt die technische Ausführung das Handhaben unterschiedlicher Produkte, gleichzeitig die Beschickung von Arbeitsplätzen oder Maschinen mit Werkzeugen und Vorrichtungen. Die Module zum Handhaben sind schnell montierbar und durch zugehörige Einschübe in eine Steuerung zu einem z.B. freiprogrammierbaren Handhabungssystem zusammensetzbar. Das System läßt verschiedene Anordnungen der Module zu. Die zugehörigen Magazine, die zu beschickenden Transfersysteme, Rundschalttische oder sonstige fördertechnischen Einrichtungen sind in ihrer Anordnung zum Handhabungssystem frei. Winkel und Höhe können gezielt angefahren werden.

Vorrichtung und System nach der Erfindung sind insbesondere in hervorragender Weise für den Einsatz an flexiblen Montage- oder Fertigungszellen geeignet. Die erfindungsgemäße Vorrichtung kann als Bindeglied zwischen der betrieblichen Logistik und den einzelnen Fertigungs- und Montagezellen dienen, so daß die Flexibilisierung der Produktion verbessert bzw. in verschiedenen Bereichen überhaupt erst ermöglicht wird.

Weitere Merkmale, Vorteile und Einzelheiten der Erfindung ergeben sich aus der nachfolgenden Beschreibung beispielhafter Ausführungsformen der Erfindung anhand der anhängenden Zeichnungen.

Fig. 1 zeigt eine bevorzugte mögliche Komponentenkombination nach der Erfindung.

Fig. 2 zeigt zum erfindungsgemäßen System gehörige periphere Baugruppen.

Fig. 3 zeigt eine beispielhafte Anwendung der Erfindung.

Fig. 4 zeigt eine weitere mögliche Anwendung der Erfindung.

Fig. 5 zeigt eine dritte mögliche Anwendung der Erfindung.

Fig. 6 zeigt eine andere mögliche Komponentenkombination nach der Erfindung.

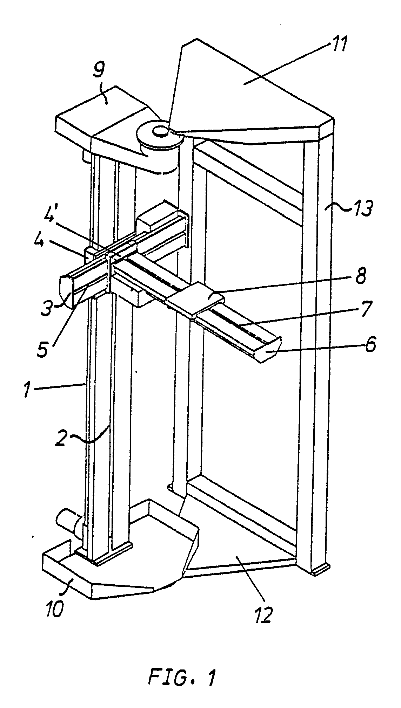

Gemäß Fig. 1 gehören zu einer Komponentenkombination nach dem erfindungsgemäßen System mehrere Handhabungs- oder Be wegungsmodule. In der dargestellten Ausführungsform besteht ein vertikales Bewegungsmodul 1 im wesentlichen aus einer Schiene, die in geeigneter Weise profiliert sein kann. Die Antriebselemente liegen innerhalb des Profils. Sie sind in der Rille 2 mit dem ersten horizontalen Bewegungsmodul 3 verbunden, welches wiederum mit Hilfe einer geeigneten Halterung 4 lösbar mit der Schiene des vertikalen Bewegungsmoduls 1 verbunden und insgesamt vertikal verschiebbar ist. Auch das horizontale Bewegungsmodul 3 hat im wesentlichen die Form einer Profilschiene mit ähnlichen konstruktiven Charakteristika wie den innenliegenden Antriebselementen und der in der Rille 5 hergestellten Verbindung zum nächsten Modul. Seinerseits durch eine geeignete Halterung 4' mit dem ersten horizontalen Bewegungsmodul 3 lösbar verbunden wird in der horizontalen Rille 5 ein zweites horizontales Bewegungsmodul 6 in horizontaler Richtung angetrieben, das in gleicher Weise wie die beiden erstgenannten Bewegungsmodule 1, 3 geformt ist und in einer horizontalen, ebenen Fläche eine horizontale Rille 7 aufweist, in der die Antriebskräfte übertragen werden.

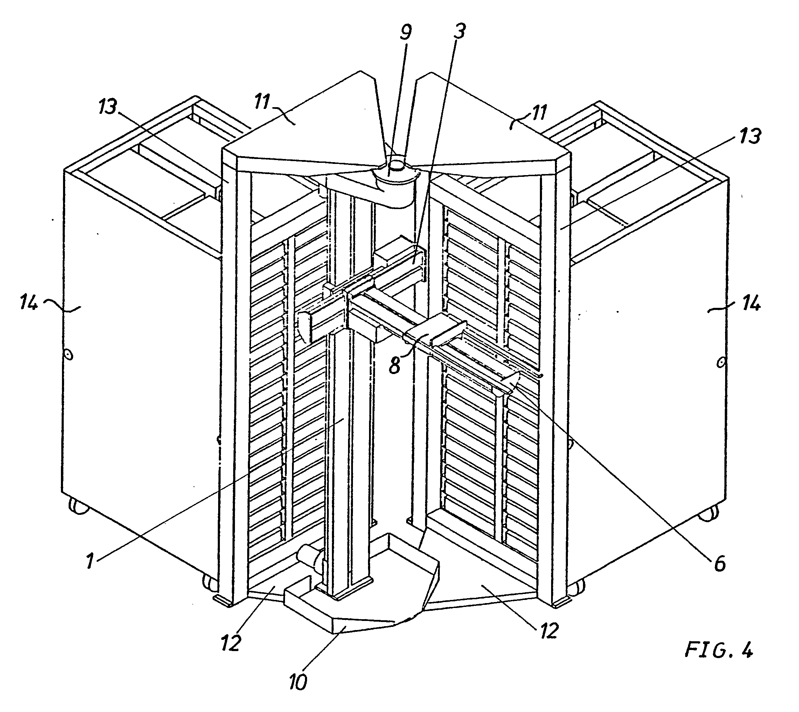

Während das erste horizontale Bewegungsmodule 3 mit beiden Enden von der Kombination abragt, ragt das zweite horizontale Bewegungsmodul 6 nur einseitig ab. In seiner horizontalen Rille 7 ist eine Greifeinrichtung 8, die auch als Palettengreifer bezeichnet werden kann und ebenfalls in Modulbauweise ausgeführt ist, horizontal verschiebbar. Die Greifeinrichtung 8 kann in ihrer Modulbauform z.B. aus einem angetriebenen horizontal verfahrbaren Schlitten bestehen, auf den an den jeweiligen Einsatzfall angepaßte Aufnahmeeinrichtungen für die Paletten bzw. palettenähnliche oder sonstige Gegenstände montiert werden können. Sie kann auch beispielsweise als Plattengreifer, Schalengreifer oder, wie in Fig. 3 zu erkennen, als teleskopartiger Gabelgreifer ausgebildet sein, je nach dem wie es der Einzelfall erfordert. Wesentlich ist, daß sie geeignet ist, Paletten oder palettenähnliche Gegenstände, die in einem Magazin abgelegt sind, zu unterfahren und aufzunehmen, zu untergreifen oder zu durchgreifen.

Aus dem oben Gesagten folgert, daß die drei linearen Bewegungsmodule 1, 3, 6 in die drei Richtungen des Raumes weisen und dementsprechende Bewegungen der Greifeinrichtung 8 zulassen.

Mit dem oberen und unteren Ende des vertikalen Bewegungsmodules 1 ebenfalls lösbar verbunden sind je ein Rotationsmodul 9, 10, mit deren Hilfe die Gesamtkombination um jeden beliebigen Winkel um eine vertikale Achse gedreht werden kann. Das untere Rotationsmodul 10 kann vorzugsweise schalenförmig ausgebildet sein. Verdrehbar gehalten wird die gesamte Kombination zwischen zwei Konsolen 11, 12, die von den Schmalseiten eines rechteckigen Grundgestells 13, vorzugsweise aus Profilmaterial, abragen.

Durch den modularen Aufbau der oben beschriebenen Vorrichtung oder Kombination, d.h. durch die Verwendung von Baueinheiten, die jeweils eine abgeschlossene Funktion umfassen und einfach zu lösende Schnittstellen zur übrigen Kombination haben, läßt sich die Vorrichtung in vorteilhafter Weise durch Modulaustausch oder Hinzufügen anderer Module leicht für verschiedene Verwendungszwecke um- bzw. aufrüsten. Zu diesem Zweck sind nach einem wichtigen Grundgedanken der Erfindung alle Module in unterschiedlichen Längen oder Radien ausführbar und gegeneinander austauschbar. Außerdem können die Module für verschiedene Gewichtsbereiche ausgelegt und mit allen denkbaren Antriebsarten ausgerüstet werden. Die Achsen können mit einer freiprogrammierbaren Positioniersteuerung oder in ihrer einfachsten Ausführung mit Anschlägen ausgestattet werden.

Ein wesentliches Merkmal der erfindungsgemäßen Vorrichtung ist es auch, daß das Grundgestell 13, das die Kombination der Bewegungs- bzw. Rotationsmodule 1, 3, 6, 9, 10 positioniert, die Bewegungsmöglichkeiten der Module kaum einschränkt. In der in Fig. 1 dargestellten Ausführungsform ist die einzige zu beachtende Randbedingung, daß die Greifeinrichtung 8 eingefahren sein muß, bevor sie verfahren wird.

Das Grundgestell 13 mit den Konsolen 11, 12 hat also die Hauptaufgabe, die Module so zu positionieren, daß deren Arbeitsbereich nicht behindert wird. Durch Aufrüstung mittels Spanneinrichtungen kann schon das Grundgestell 13 dazu genutzt werden, Magazine gegenüber der aus Bewegungs-bzw. Rotationsmodulen 1, 3, 6, 9, 10 kombinierten erfindungsgemäßen Handhabungsvorrichtung zu positionieren. Bei radialer Ausrichtung des Grundgestells sind bei der Verwendung der Rotationsmodule keine konstruktiven Restriktionen zu berücksichtigen.

Das Grundgestell 13 kann außerdem durch einfache Montage von (nicht dargestellten) Haltevor-richtungen zu einer Magazinkoppelstation aufgerü-stet werden.

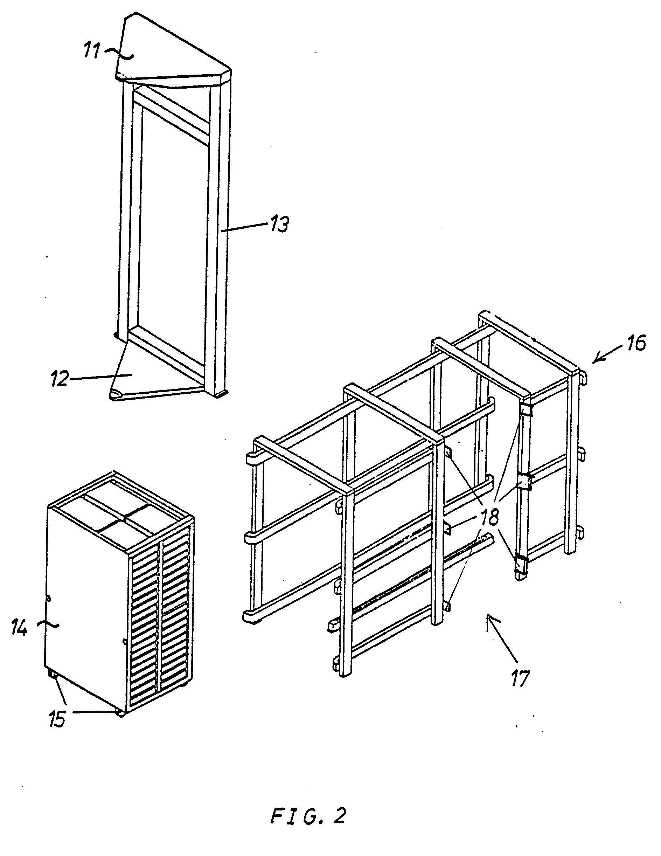

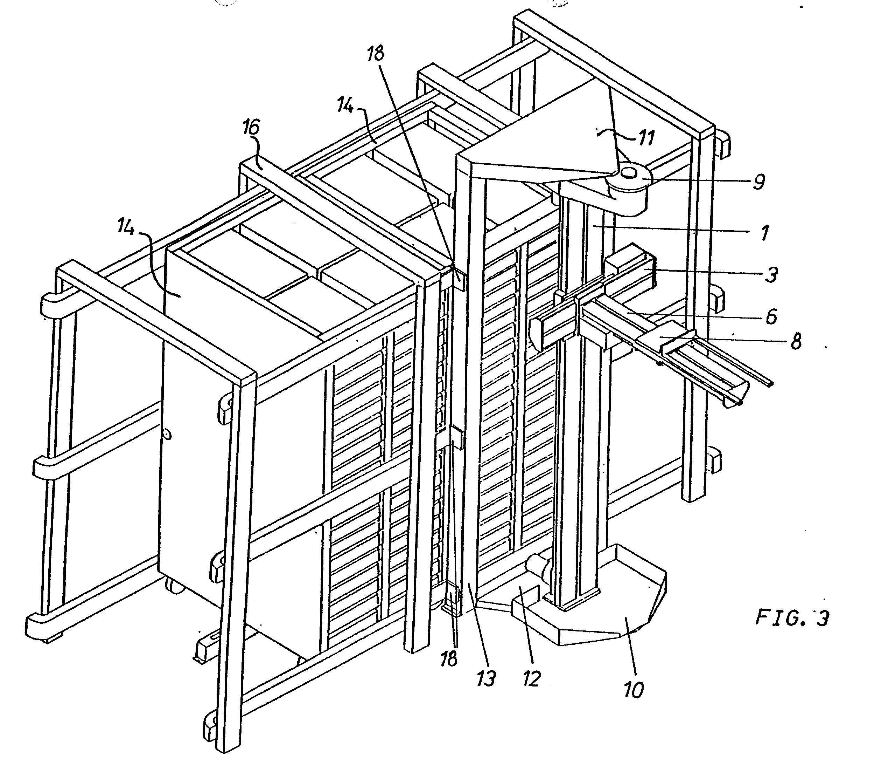

Fig. 2 zeigt neben der oben beschriebenen Handhabungsvorrichtung zum System gehörige periphere Baugruppen. Es sind dies weitere, zu Koppelstationen aufgerüstete Grundgestelle 13 mit ihren Konsolen 11, 12, Magazine 14, die vorzugsweise auf Rollen 15 verfahrbar sind und in denen die Paletten oder ähnliche Gegenstände übereinander und in Säulen nebeneinander gespeichert sind, sowie Magazinschleusen 16, die das Speichervolumen wesentlich vergrößern und der Handhabungsvorrichtung mehrere Magazine anbieten können. Außerdem kann eine Hubstation erforderlich werden, wenn Gegenstände zur Handhabung aus Transfersystemen oder anderen peripheren Einrichtungen zum Unterfahren ausgehoben werden müssen (in der Zeichnung nicht dargestellt).

Die Magazine 14 können vorzugsweise untereinander verbunden und so zu Transportverbänden gekoppelt werden. Sie benötigen keine Hilfsenergie, sondern werden gegeneinandergeschoben und von Hand verriegelt. Auch können sie in Gestaltung und Abmessung an den jeweiligen Einsatzfall angepaßt werden und ermöglichen so die Ablage bzw. Speicherung unterschiedlicher Gegenstände.

Der Einsatz fahrerloser Transportsysteme (FTS) ermöglicht die automatische Zuführung und Positionierung von Magazinen 14 zur Handhabungsvorrichtung. Zu diesem Zweck können die Magazine 14 an ein solches fahrerloses Transportsystem mit Hilfe einer der Koppelstation (aufgerüstetes Grundgestell 13) ähnlichen Vorrichtung automatisch an- und von ihm abgekoppelt werden.

Die Magazinschleuse 16 hat die Hauptaufgabe, der Koppelstation, also dem durch Haltevorrichtungen aufgerüsteten Grundgestell 13 einer erfindungsgemäßen Handhabungsvorrichtung, automatisch Magazine 14 anzubieten. Die Magazinschleusen 16 bestehen nach der in Fig. 2 dargestellten Ausführungsform im wesentlichen aus in ihrem Querschnitt dem Profil der Magazingehäuse angepaßten, tunnelartigen Gitterkonstruktionen, vorzugsweise aus Profilmaterial. Andere Ausführungsformen der Magazinschleusen sind jedoch denkbar. Die Magazine 14 können einzeln oder miteinander gekoppelt einer Magazinschleuse 16 zugeführt werden, in welcher sie seitlich geführt und am Boden z.B. mittels einer Schleppkette oder einer anderen geeigneten Vorrichtung positioniert und angetrieben werden. Eine Führung auf Schienen ist ebenso denkbar. Seitlich weist jede Magazinschleuse 16 wenigstens eine oder, je nach Größe der Anlage, in Abständen mehrere, die gesamte Zugriffsfläche eines Magazins 14 freigebende, offene Stelle(n) 17 auf.

An einer solchen offenen Stelle 17 wird dann einer erfindungsgemäßen Handhabungsvorrichtung der Inhalt eines Magazins 14 zur Weiterbehandlung angeboten. Ein solcher Anwendungsfall der Erfindung ist in Fig. 3 dargestellt. In die Magazinschleuse 16 sind zwei Magazine 14 eingeschoben. An der offenen Stelle 17 steht eine Handhabungsvorrichtung gemäß Fig. 1 mit zur Koppelstation aufgerüstetem Grundgestell 13 bereit, wobei das zu einer Koppelstation ausgebaute Grundgestell 13 seitlich in die Magazinschleuse 16 integriert ist, durch an der offenen Stelle 17 am Gittergerüst der Magazinschleuse 16 ausgebildete Anschläge 18 gehalten ist und mit der Magazinschleuse 16 vorzugsweise fest verbunden sein kann. Die Magazinschleuse 16 hat die Aufgabe, die Magazin 14, die untereinander verbunden sein können, der Koppelstation positioniert anzubieten und so die Koppelung zu ermöglichen. Ebenso können die Magazine mittels fahrerlose Transportsysteme (FTS) dem Handlingsystem angeboten werden.

Hat ein Magazin 14 die Position für Kopplung mit der Handhabungsvorrichtung, d.h. die offene Stelle 17 der Magazinschleuse 16 erreicht, wird der Antrieb (z.B. einer Schleppkette) abgeschaltet und das Magazin 14 verriegelt bzw. an der Koppelstation angekoppelt. Mit der erfindungsgemäßen Handhabungsvorrichtung lassen sich nun durch vorteilhafterweise programmgesteuerte Bewegung der Rotationsmodule 9, 10 und der linearen Bewegungsmodule 3, 6 für vertikale und horizontale Bewegung sowie letztlich der Greifeinrichtung 8 dem angekoppelten Magazin gezielt oder in bestimmter Reihenfolge Paletten samt Inhalt entnehmen und einem Arbeitsplatz in einer Fertigungs- oder Montagezelle bzw. -straße zuführen oder auf einem z.B. als Puffer zwischen Weiterverarbeitungsstätten dienenden Transferband oder einer sonstigen Transporteinrichtung abgesetzt werden. Die Paletten mit den darin abgelegten Teilen, wie Werkstücke, benötigte Werkzeuge, Baugruppen und dergleichen können direkt einer Person oder auch einer ihrerseits programmgesteuerten Ver- oder Bearbeitungsmaschine positioniert zugeführt werden. Nach beendetem Arbeitsvorgang können die bearbeiteten oder nicht mehr benötigten Gegenstände in der gleichen Weise einem Transportsystem oder einem anderen Magazin zur Zwischenspeicherung oder, insbesondere wenn es sich um leere Paletten handelt, in dasselbe Magazin abgelegt werden.

Ist das Magazin 14 abgearbeitet, wird die Verriegelung bzw. Koppelung gelöst und das nächste Magazin 14 nachgeschoben. Das vorangehende Magazin 14 wird dabei in der Magazinschleuse 16 weitergeschoben.

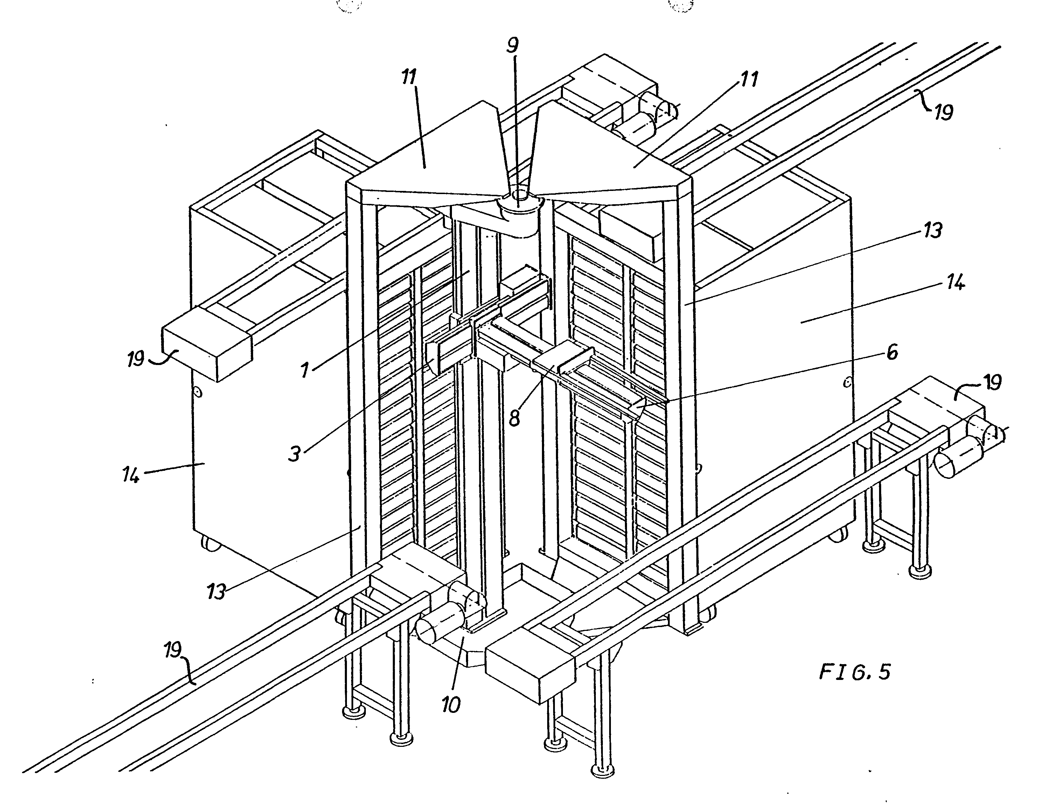

Von besonderer Bedeutung für das erfindungsgemäße System sind die Rotationsmodule 9, 10 der oben beschriebenen Handhabungsvorrichtung; sie erlauben nämlich die radiale Anordnung der Magazine, der Transfer- und sonstiger peripherer Einrichtungen. Die Anordnung dieser Einrichtungen zueinander ist beliebig und nicht an starre Höhe oder Winkel gebunden, wobei als weitere Besonderheit des Systems die Verwendung mehrerer, auch später nachrüstbarer Koppelstationen anzusehen ist, deren Anordnung zueinander gleichfalls in verschiedenen Winkeln und Abständen möglich ist. Die Fig. 4 und 5 zeigen beispielhaft jeweils einen solchen Anwendungsfall.

Fig. 4 zeigt ein erfindungsgemäßes System mit zwei Koppelstationen, die, wie oben bereits ausgeführt, jeweils aus einem mittels Spanneinrichtungen aufgerüsteten Grundgestell 13 mit den Konsolen 11, 12 bestehen. Die Koppelstationen stehen im Winkel zueinander, und an sie angekoppelt ist jeweils ein Magazin 14. Die Magazine 14 werden in der einfachsten Ausführung von Hand an eine Koppelstation herangeschoben, und durch einen Sensor oder Schalter, der die nahezu richtige Position des Magazins 14 signalisiert, wird eine Klemmvorrichtung ausgelöst, die das Magazin 14 formschlüssig mit der Koppelstation verbindet. Zwischen den Konsolen 11, 12 beider Grundgestelle 13 oder Koppelstationen ist über die Rotationsmodule 9, 10 eine erfindungsgemäße Handhabungsvorrichtung gemäß Fig. 1 bestehend aus den Rotationsmodulen 9, 10 und linearen Bewegungsmodulen 1, 3, 6 drehbar gehalten. Durch programmgesteuertes Drehen und lineares Verfahren mit Hilfe der Rotations- und linearen Bewegungsmodule wird der Greifeinrichtung 8, die in der dargestellten Ausführungsform als Gabelgreifer ausgebildet ist, jede Stelle der Magazine 14 zugänglich. So können Paletten und darin abgelegte Gegenstände den Magazinen 14 entnommen und einer Bearbeitungsstätte zugeführt oder umgekehrt von einem Transfersystem aufgenommen und in den Magazinen 14 (zwischen-) gespeichert werden. Ist ein Magazin 14 abgearbeitet, wird von einer Person oder einer elektronischen Steuerung die Verbindung mit der Koppelstation aufgehoben, und das Magazin kann wieder entnommen und gegen ein anderes ausgetauscht werden.

Auch hier ist selbstverständlich der Einsatz fahrerloser Transportsysteme (FTS) möglich für eine automatische Zuführung und Positionierung von Magazinen 14 zum Handhabungssystem. Zu diesem Zweck können die Magazine 14 an das FTS mit Hilfe einer der Koppelstation ähnlichen Vorrichtung automatisch an- und abgekoppelt werden.

Fig. 5 zeigt eine Erweiterung des Systems gemäß Fig. 4; es soll hier am Beispiel von Doppelgurtbändern 19 die Vielfalt der Anschlußmöglichkeiten von Transfersystemem als Ergänzung des erfindungsgemäßen Systems deutlich werden.

Funktionell mit einem Handhabungssystem gemäß Fig. 4 mit im Winkel zueinander stehenden Magazinen 14, Koppelstationen und einer erfindungsgemäßen Handhabungsvorrichtung verbunden sind mehrere Doppelgurtbänder 19, deren Anordnung in Abstand, Höhe und Winkel beliebig ist. So wird die Entnahme von Gegenständen mittels der Greifeinrichtung 8 aus einem bereitgestellten Magazin 14 und die Ablage auf z.B. einem Doppelgurtband 19, die Entnahme eines Gegenstandes vom Transfersystem und die Ablage im Magazin 14 für den Weitertransport zu einer anderen Fertigungs- oder Montagezelle oder die Entnahme eines Gegenstandes vom Transfersystem, die Zwischenspeicherung und die spätere erneute Ablage auf dem Transfersystem möglich.

Die erfindungsgemäße Modulbauweise der Handhabungsvorrichtung mit den in verschiedenen Ausführungen in unterschiedlichen Größen und Radien und für unterschiedliche Gewichtsbereiche ausgelegten linearen Bewegungsmodulen 1, 3, 6 und Rotationsmodulen 9, 10 erlaubt durch unterschiedliche Kombination und Austausch von Modulen eine praktisch unbegrenzte Anpassung an den jeweiligen Einsatzzweck, z.B. der Art der zu handhabenden Gegenstände oder der Art und Weise der Handhabung selbst, und gestattet auch immer neue Erweiterungen des Systems mit peripheren Baugruppen, die hinsichtlich ihrer Anzahl und Anordnung in Höhe, Radius oder Winkelstellung so gut wie keiner Beschränkung unterliegen. So können beispielsweise die Doppelgurtbänder 19 gemäß Fig. 5 vor, neben oder über Magazine 14, aber auch im Winkel zueinander verlaufen.

Nicht in jedem Anwendungsfall werden alle Komponenten für eine sinnvolle, funktionsfähige Modulkombination benötigt. Deshalb sind die lineare Bewegungs- und die Rotationsmodule in ihren verschiedenen Ausführungen nach der Erfindung auch unabhängig voneinander einsetzbar, austauschbar und verschieden kombinierbar. Eine bestehende Modulkombination läßt sich schnell für einen neuen Verwendungszweck umrüsten bzw. durch Aufrüstung in ihrer Funktionsfähigkeit erweitern.

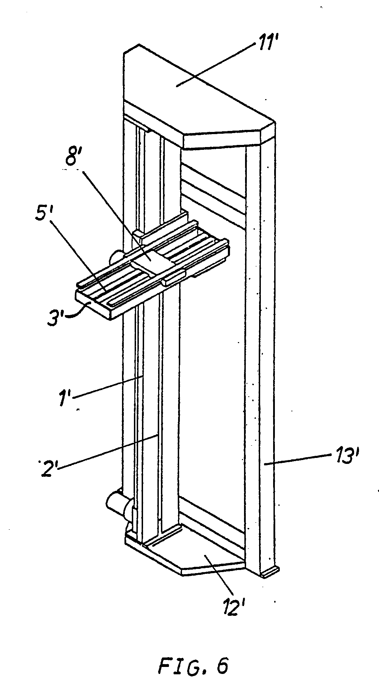

In Fig. 6 ist beispielhaft eine weitere mögliche, einfachere Modul- oder Komponentenkombination dargestellt.

Zu sehen ist ein Grundgestell 13' mit Konsolen 11', 12' an seinen Schmalseiten. Zwischen den Konsolen 11', 12' gehalten ist ein vertikales Bewegungsmodul 1'. Mit diesem lösbar verbunden und in der Rille 2' vertikal verschiebbar angetrieben ist ein horizontales Bewegungsmodul 3', dessen Antrieb in einer horizontalen, ebenen Fläche verläuft. In der horizontalen Rille 5' ist eine Greifeinrichtung 8' ebenfalls in Modulbauform horizontal verschiebbar. Wie zu sehen ist, wurde bei dieser vereinfachten Komponentenkombination auf die Rotationsmodule und ein zweites horizontales Bewegungsmodul verzichtet. Dafür wurde eine Ausführungsform der Greifeinrichtung 8' eingesetzt, die das Durchfahren der zu handhabenden Gegenstände zuläßt, d.h. die Gegenstände werden von vorn aufgenommen und nach hinten abgelegt oder umgekehrt. In bestimmten Anwendungsfällen kann sich so der Einsatz von Rotationsmodulen erübrigen, und die so ausgebildete Kombination benötigt sehr wenig Platz.

Die Vorrichtung nach Fig. 6 wurde hauptsächlich beschrieben, um die hohe Flexibilität und hervorragende Anpaßbarkeit an gegebene Umstände und Erfordernisse der erfindungsgemäßen Vorrichtung zu veranschaulichen. Weitere Kombinationsmöglichkeiten von Einzelmodulen in unterschiedlichster Ausführung zu sinnvollen, funktionstüchtigen Vorrichtungen sind möglich.

Die erfindungsgemäße Vorrichtung bzw. das erfindungsgemäße System eignet sich in hervorragender Weise für den Einsatz an flexiblen Fertigungs- oder Montagezellen. Sie dienen dabei als Bindeglied zwischen der betrieblichen Logistik und den einzelnen Fertigungs- und Montagezellen, wodurch die Flexibilisierung der Produktion erheblich verbessert werden kann und in verschiedenen Bereichen überhaupt erst ermöglicht wird. Der Einsatz eines Identsystems erlaubt die automatische Produktion oder Montage unterschiedlichster Produkte durch den gezielten Zugriff zu bestimmten Speicherplätzen. Daneben wird die automatische Umrüstung von Maschinen und Vorrichtungen erleichtert, indem neben den unterschiedlichen Produkten auch die zur Ver- oder Bearbeitung entsprechend benötigten Werkzeuge und Vorrichtungen über das System abgerufen und verwaltet werden, d.h. der Person an einem Arbeitsplatz, einer Maschine oder einem Roboter zugeführt, nach beendetem Arbeitsgang davon wieder abgeführt und entsorgt bzw. (zwischen-) gespeichert werden. Die für die Be- oder Verarbeitung bestimmter Produkte benötigten Werkzeuge oder Vorrichtungen können dabei zusammen mit den Magazinen, in denen zu be- oder verarbeitende Produkte gespeichert sind, zu- und abgeführt oder in speziell dafür beigestellten Magazinen verwaltet werden.

Vorrichtung und System nach der Erfindung eignen sich auch in ebenso hervorragender Weise dazu, bestehende Anlagen, bei denen das Problem des Zu- und Abführens von Teilen meist unzulänglich gelöst ist, nachträglich in geeigneter Weise um- bzw. aufzurüsten. Durch die modulare Bauweise können dabei die vielfältigsten, unterschiedlichen Aufgabenstellungen ohne zusätzliche, konstruktive Änderung bewältigt werden, Ein minimaler Platzbedarf und die Möglichkeit einer flexiblen Anordnung von Baugruppen sind weitere wesentliche Vorteile der Erfindung.

Bestehende Anlagen weisen im Normalfall eine Antriebsart, aber unterschiedliche Steuerungen oder Regelungen auf. Das System ist deshalb autark konzipiert, d.h. es ist ohne Datenleitungen oder Verknüpfung zu anderen Steuerungen funktionsfähig. Darüber hinaus kann es aber auch über eine Schnittstelle von einer nicht zum System gehörenden zentralen Steuerung angesprochen und überwacht werden.

**Ansprüche**

1. Vorrichtung und System zur Handhabung, Bereitstellung, Zwischenspeicherung und/oder Magazinierung von Paletten, palettenähnlichen oder anderen Gegenständen wie Werkzeugen, Werkstücken, Baugruppen und/oder Vorrichtungen, die vorzugsweise palettiert sind, mit einer um eine vertikale Achse verdrehbaren und/oder linear verschiebbaren Greifeinrichtung
**gekennzeichnet durch**
eine modulare Bauweise der Handhabungsvorrichtung dergestalt, daß die Handhabungsvorrichtung aus einer an den Anwendungszweck angepaßten Kombination verschiedener Bewegungsmodule (1, 3, 6, 9, 10; 1′, 3′) besteht, durch welche die ebenfalls in Modulbauweise ausgeführte Greif- oder Aufnahmeeinrichtung (Greifeinrichtung 8; 8′) um eine vertikale Achse um einen beliebigen Winkel verdrehbar und/oder in unterschiedliche Höhen verfahrbar und in Relation zu verschiedenen peripheren Baugruppen wie Magazinen (14), Transfersystemen (19) oder Bearbeitungsstätten positionierbar ist.

2. Vorrichtung und System nach Anspruch 1, dadurch gekennzeichnet, daß die Handhabungsvorrichtung aus einem zwischen zwei Rotationsmodulen (9, 10) gehaltenen vertikalen Bewegungsmodul (1), einem an diesem vertikal geführten, ersten horizontalen Bewegungsmodul (3) einem an diesem horizontal geführten, zweiten horizontalen Bewegungsmodul (6) und einer an diesem horizontal geführten Greifeindrichtung (8) in Modulbauweise besteht.

3. Vorrichtung und System nach Anspruch 2, dadurch gekennzeichnet, daß die Handhabungsvorrichtung über die Rotationsmodule (9, 10) zwischen den von einem Grundgestell (13) abragenen Konsolen (11, 12) drehbar gehalten ist.

4. Vorrichtung und System nach Anspruch 1, dadurch gekennzeichnet, daß die Handhabungsvorrichtung aus einem vertikalen Bewegungsmodul (1′) und einem an diesem vertikal geführten, horizontalen Bewegungsmodul (3′) und einer an diesem horizontal geführten Greifeinrichtung (8′) in Modulbauweise besteht.

5. Vorrichtung und System nach Anspruch 4, dadurch gekennzeichnet, daß das vertikale Bewegungsmodul (1′) zwischen den von einem Grundgestell (13′) abragenden Konsolen (11′ 12′) gehalten ist.

6. Vorrichtung und System nach einem der vorangehenden Ansprüche, dadurch gekennzeichnet, daß die Greifeinrichtung (8; 8′) auf dem horizontalen Bewegungsmodul (6; 3′) beidseitig der Vorrichtung und durchgehend ausfahrbar ist.

7. Vorrichtung und System nach Anspruch 3 oder 5, dadurch gekennzeichnet, daß das Grundgestell (13, 13′) Rahmenform hat und radial ausgerichtet ist.

8. Vorrichtung und System nach einem der Ansprüche 3, 5 oder 6, dadurch gekennzeichnet, daß das Grundgestell (13, 13′) durch Halte- oder Klemmvorrichtungen zu einer Koppelstation aufrüstbar ist, mittels der die Handhabungsvorrichtung an periphere Baugruppen wie Magazine (14) ankoppelbar ist.

9. Vorrichtung und System nach einem der Ansrpüche 3, 5, 7 oder 8, dadurch gekennzeichnet, daß an einer Koppelstation eine Magazinschleuse (16) befestigbar ist.

10. Vorrichtung und System nach einem der vorangehenden Ansprüche, dadurch gekennzeichnet, daß die Rotationsmodule (9, 10) und/oder vertikalen und horizontalen Bewegungsmodule (1, 3, 6; 1′, 3′) sowie die Greifeinrichtung (8; 8′) in unterschiedlichen, leicht austauschbaren Ausführungen, mit unterschiedlichen Radien und/oder Längen und für unterschiedliche Gewichtsbereiche ausgelegt vorhanden sind, die dem Verwendungszweck angepaßt kombinierbar sind.

11. Vorrichtung und System nach einem der vorangehenden Ansprüche, dadurch gekennzeichnet, daß die Rotationsmodule (9, 10) und/oder vertikalen und horizontalen Bewegungsmodule (1, 3, 6; 1′, 3′) und die Greifeinrichtung (8; 8′) mit beliebigen Antriebsvorrichtungen ausgerüstet sind.

12. Vorrichtung und System nach einem der vorangehenden Ansprüche, dadurch gekennzeichnet, daß die Rotationsmodule (9, 10) und/oder vertikalen und horizontalen Bewegungsmodule (1, 3, 6; 1′, 3′) mit Anschlägen aus gestattet sind.

13. Vorrichtung und System nach einem der Ansprüche 1 bis 8, dadurch gekennzeichnet, daß die Rotationsmodule (9, 10) und/oder vertikalen und horizontalen Bewegungsmodule (1, 3, 6; 1′, 3′) und die Greifeinrichtung (8; 8′) mit einer freiprogrammierbaren Positionssteuerung ausgestattet sind.

14. Vorrichtung und System nach einem der vorangehenden Ansprüche, dadurch gekennzeichnet, daß die Handhabungsvorrichtung über eine Koppelstation an Magazine (14) von deren Zugriffseite her oder an Magazinschleusen (16), in denen Magazine (14) einzeln oder im Verbund verfahrbar sind, an einer die gesamte Zugriffsfläche eines Magazins (14) frei gebenden Stelle (17) ankoppelbar ist.

15. Vorrichtung und System nach Anspruch 14, dadurch gekennzeichnet, daß die Magazine (14) einzeln oder im Verbund von Hand oder maschinell verfahrbar und in Bezug auf die Koppelstation positionierbar sind.

16. Vorrichtung und System nach Anspruch 14, dadurch gekennzeichnet, daß die Magazine (14) in der Magazinschleuse (16) automatisch in Bezug auf die Koppelstation positionierbar sind.

17. Vorrichtung und System nach einem der Ansprüche 14 bis 16, dadurch gekennzeichnet, daß der Querschnitt der Magazinschleuse (16) dem Profil der Magazine (14) angepaßt und für letztere eine seitliche Führung vorgesehen ist.

18. Vorrichtung und System nach einem der Ansprüche 1 bis 3 oder 7 bis 15, dadurch gekennzeichnet, daß mehrere Koppelstationen in Bezug auf eine mit Rotationsmodulen (9, 10) ausgestattete Handhabungsvorrichtung im Winkel angeordnet sind und daß periphere Baugruppen wie Magazine, Transfereinrichtung oder sonstige in radialer Anordnung vorgesehen sind.

19. Vorrichtung und System nach einem der vorangehenden Ansprüche, dadurch gekennzeichnet, daß die Handhabungsvorrichtung samt Koppelstation insgesamt verfahrbar ist.

20. Vorrichtung und System nach einem der vorangehenden Ansprüche gekennzeichnet durch die Integration eines weiteren oder mehrerer Identsysteme.

21. Vorrichtung und System nach einem der vorangehenden Ansprüche, dadurch gekennzeichnet, daß durch die Handhabungsvorrichtung einem Roboter, einer anderen Handhandbungsvorrichtung, einer Fertigungs- oder Montageeinrichtung und/oder einem Transfersystem gezielt Gegenstände aus einem Magazin zuführbar bzw. erneut in einem Magazin ablegbar sind.

22. Vorrichtung und System nach einem der vorangehenden Ansprüche, dadurch gekennzeichnet, daß sie hinsichtlich der Funktion und der Steuerung autark konzipiert sind.

FIG. 1

FIG. 2

FIG. 3

FIG. 4

EP 0 352 785 A1

FIG.5

EP 0 352 785 A1

FIG. 6

| | EINSCHLÄGIGE DOKUMENTE | | EP 89113857.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE - A1 - 2 524 330 (LANG) | 1 | B 65 G 1/06 B 66 F 9/07 |
| Y | * Gesamt * -- | 2,4 | |
| D,Y | DE - C2 - 2 940 051 (ENGELER) * Fig. 1 * -- | 2,4 | |
| A | DE - A - 1 937 470 (THE AIR PREHATER COMPANY INC) * Fig. 1 * -- | 1 | |
| A | US - A - 4 678 390 (BONNETON et al.) * Fig. 1 * -- | 1 | |
| A | DE - A1 - 3 444 004 (SIEMENS AG) * Fig. 1 * -- | 1 | RECHERCHIERTE SACHGEBIETE (Int. Cl.4) |
| A | FR - A - 2 092 747 (MEYER) * Gesamt * ---- | 1,2 | B 65 G B 66 F |

Der vorliegende Recherchenbericht wurde für alle Patentansprüche erstellt.

| Recherchenort | Abschlußdatum der Recherche | Prüfer |
|---|---|---|
| WIEN | 20-10-1989 | PISSENBERGER |